(19) Europäisches Patentamt
European Patent Office
Office européen des brevets

(11) **EP 3 359 590 B1**

(12) **EUROPEAN PATENT SPECIFICATION**

(45) Date of publication and mention
of the grant of the patent:
**24.11.2021 Bulletin 2021/47**

(21) Application number: **16775699.8**

(22) Date of filing: **30.09.2016**

(51) Int Cl.:
*D21H 21/14* (2006.01)          *C08J 9/00* (2006.01)
*C08K 3/34* (2006.01)          *C08K 7/14* (2006.01)
*C08K 9/04* (2006.01)          *C08K 9/08* (2006.01)
*D21H 17/67* (2006.01)          *D21H 17/68* (2006.01)

(86) International application number:
**PCT/EP2016/073446**

(87) International publication number:
**WO 2017/060171 (13.04.2017 Gazette 2017/15)**

(54) **FILLED COMPOSITIONS**

GEFÜLLTE ZUSAMMENSETZUNGEN

COMPOSITIONS CONTENANT DES CHARGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.10.2015 EP 15306581
29.01.2016 EP 16305093**

(43) Date of publication of application:
**15.08.2018 Bulletin 2018/33**

(73) Proprietor: **IMERTECH SAS
75015 Paris (FR)**

(72) Inventors:
• **CREPIN-LEBLOND, Jérôme
31770 Colomiers (FR)**
• **CROUCH, Tarquin
Southborough
Kent TN4 0NL (GB)**

(74) Representative: **Haseltine Lake Kempner LLP
Redcliff Quay
120 Redcliff Street
Bristol BS1 6HU (GB)**

(56) References cited:
EP-A1- 2 746 325          EP-A1- 2 770 029
EP-A1- 2 781 548          WO-A1-2015/150146
KR-B1- 101 012 126          US-A- 5 023 286
US-A1- 2003 153 670          US-A1- 2007 010 600
US-A1- 2011 256 333

• DATABASE WPI Week 201548 Thomson Scientific, London, GB; AN 2015-32169H XP002764471, & CN 104 479 350 A (JIANGXI GUKANG NEW MATERIAL CO LTD) 1 April 2015 (2015-04-01)
• DATABASE WPI Week 201504 Thomson Scientific, London, GB; AN 2015-03690X XP002764472, & CN 104 130 571 A (NANTONG RUILONG NEW MATERIALS CO LTD) 5 November 2014 (2014-11-05)

**Description**

**TECHNICAL FIELD**

The present invention is directed to a filled composition comprising a substrate, functional filler, and an inorganic additive for reducing the odour of the filled composition, wherein the inorganic additive is present in an amount sufficient to reduce the odour of the filled composition absent the inorganic additive, and to related uses, methods and articles of manufacture.

**BACKGROUND OF THE INVENTION**

Filled polymers, such as talc-filled polypropylene, are widely used in automotive applications. For interior and under the hood applications, odour and the level of volatile organic compounds (VOCs) of the final parts are required to meet specifications given by the car manufacturers. In interior/under the hood automotive parts, talc or glass fibres are often used in polymers such as polypropylene for reinforcement, thermal resistance and dimensional stability. However, these fillers can also lead to an increase in odour. Thus, there is ongoing need to develop new and improved filled compositions for use in automotive applications and the like. Further, UV exposure through sunlight may affect materials used in automotive parts, for example, through polymer degradation which can adversely affect the colour, shape and/or mechanical properties (e.g., tensile strength) of the materials used. Thus, there is an ongoing need to develop new and improved filled compositions with enhanced UV stability. US-A-5023286 relates to polypropylene resin compositions that exhibit an improved smell over prior art polypropylene resin compositions and comprises a polypropylene resin containing an inorganic filler, at least one phenolic antioxidant, at least on phosphorus antioxidant, and fine powders comprising aggregates of intimately bonded particles comprising zinc oxide, titanium dioxide and water.

**SUMMARY OF THE INVENTION**

According to a first aspect, the present invention is directed to a filled composition comprising a substrate, functional filler, and an inorganic additive for reducing the odour of the filled composition, wherein the inorganic additive is present in an amount sufficient to reduce the odour of the filled composition absent the inorganic additive, wherein the functional filler is a mineral filler and comprises, consists essentially, or consists of, or is a phyllosilicate mineral, wherein the inorganic additive is a mineral additive other than the functional filler, the inorganic additive being a silica-containing or silicate mineral other than wollastonite, wherein the phyllosilicate mineral is talc, wherein the substrate is a polymer, and wherein odour is determined according to standard VDA 270. In other words, the odour of the filled composition comprising the inorganic additive is reduced compared to a comparable filled composition which does not include the inorganic additive.

According to a second aspect, the present invention is directed to the use of an inorganic additive for reducing the odour of a composition comprising a substrate and a mineral filler, wherein the inorganic additive, mineral filler and substrate are as defined in the first aspect and embodiments thereof, wherein odour is determined according to standard VDA 270 and wherein the inorganic additive is a silica-containing or silicate mineral other than wollastonite.

Described herein is the use of surface treated functional filler for reducing the odour of a composition comprising a substrate, wherein the functional filler, surface treatment and substrate are as defined in the first aspect and any embodiment thereof.

According to a third aspect, the present invention is directed to the use of an inorganic additive for reducing the odour and increasing the stiffness of a filled composition comprising a substrate and mineral filler, wherein odour is determined according to standard VDA 270 and wherein the inorganic additive, mineral filler and substrate are as defined in the first aspect and any embodiment thereof.

According to a fourth aspect, the present invention is directed to a method of reducing the odour of a filled composition comprising a substrate and mineral filler, comprising adding to the filled composition an inorganic additive for reducing the odour of the filled composition wherein the inorganic additive is a silica-containing or silicate mineral other than wollastonite, wherein odour is determined according to standard VDA 270 and wherein the inorganic additive, mineral filler and substrate are as defined in the first aspect and any embodiment thereof.

Described herein is the use of an inorganic additive as defined in the first aspect and any embodiments thereof for reducing emissions from a functional composition, for example, a paint or paint base, plastic, rubber, foam, composite, and the like, optionally wherein the functional composition comprises talc as a filler.

According to a fifth aspect, the present invention is directed to a method of making a filled composition, the method comprising combining substrate, functional filler and a sufficient amount of an inorganic additive for reducing the odour of the filled composition such that the odour of the filled composition comprising the inorganic additive is reduced, compared to the filled composition absent the inorganic additive. wherein the functional filler is a mineral filler and comprises, consists essentially, or consists of, or is a phyllosilicate mineral, wherein the inorganic additive is a mineral additive other than the functional filler, the inorganic additive being a silica-containing or silicate mineral other than wollastonite, wherein odour is determined according to standard VDA 270 and wherein the inorganic additive, mineral filler and substrate are as defined in the first aspect and any embodiment thereof

Described herein is a method of making a composition, the method comprising combining substrate and a sufficient amount of an inorganic additive for reducing the odour of the composition such that the odour of the composition comprising the inorganic additive is reduced compared to the composition absent the inorganic additive.

Described herein is a method of making a composition, the method comprising combining substrate and a sufficient amount of a surface treated functional filler such that the odour of the composition is reduced compared to the composition absent the surface treated functional filler.

According to a sixth aspect, the present invention is directed to an article formed from the filled composition according to any aspect above, wherein the article is optionally an automotive interior article, for example, dashboard, interior trim, or interior body panel.

Described herein is the use of a surface treated filler, for example, mineral filler, in a composition comprising a substrate to maintain, ameliorate or improve the UV stability of the composition, wherein when the filler is talc it is in particulate form having a lamellarity index of greater than 1.0, for example, at least about 1.5, or at least about 2.0, or at least about 2.5.

Described herein is the use of surface treated filler, for example, mineral filler, in a composition comprising a substrate to retard or reduce degradation of the composition upon exposure to UV radiation, wherein when the mineral filler is talc it is in particulate form having a lamellarity index of greater than 1.0, for example, at least about 1.5, or at least about 2.0, or at least about 2.5.

## DETAILED DESCRIPTION OF THE INVENTION

It has surprisingly been found that improvements in the odour of a composition, for example, a talc-filled polymer, is achievable by incorporation of a relatively low amount of an inorganic additive (that is, an inorganic additive other than the mineral filler) and/or by surfacing treating the filler. This, in turn, may enable greater use of relatively inexpensive mineral fillers in filled compositions, for example, filled polymer compositions, without adversely affecting other properties, for example, the mechanical performance, of the filled composition.

The odour of the (optionally filled) compositions described herein, for example, polymer compositions, or articles formed therefrom may be determined by any suitable method.

Odour is determined in accordance with VDA 270, for example, VDA 270 (variant C3). Further details of odour testing according to VDA 270 are given in the Examples section below. Suitable kits for testing odour according to VDA 270 are available, for example, from companies such as Odournet GmbH.

Further, in certain embodiments, improvements in a mechanical property (e.g., stiffness) of the filled composition may be simultaneously achievable by incorporation of the inorganic additive. In certain embodiments, the mechanical property is the dimensional stability or structural integrity of the filled composition, as may be determined by any suitable measurement method.

In certain embodiments, the mechanical property is stiffness.

In other embodiments, for example, embodiments in which the filled composition is a filled polymer composition, by "stiffness" is meant the relative flexibility of the filled composition. Stiffness in this sense is a desirable property for automotive interior parts and components. In such embodiments, stiffness is directly linked to flexural modulus. The higher the flexural modulus, the stiffer the material. The lower the flexural modulus, the more flexible it is. The stiffness of the filled polymer composition or article formed therefrom may be determined by any suitable method. In certain embodiments, the stiffness of the filled polymer composition or article formed therefrom is determined by measuring its flexural modulus in accordance with ISO 178.

Unless otherwise stated, particle size properties referred to herein for the mineral filler and inorganic additive are as measured in a well known manner by sedimentation of the particulate material in a fully dispersed condition in an aqueous medium using a Sedigraph 5100 machine as supplied by Micromeritics Instruments Corporation, Norcross, Georgia, USA (www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that dso value. The $d_{10}$ value is the value at which 10% by weight of the particles have an esd less than that $d_{10}$ value. The $d_{90}$ value is the value at which 90% by weight of the particles have an esd less than that $d_{90}$ value. The $d_{95}$ value is the value at which 95% by weight of the particles have an esd less than that $d_{95}$ value. The $d_{98}$ value is the value at which 98% by weight of the particles have an esd less than that $d_{98}$ value.

As used herein, "specific surface area (BET)" means the area of the surface of the particles of the functional filler (e.g., mineral filler) and/or inorganic additive with respect to unit mass, determined according to the BET method by the quantity of argon adsorbed on the surface of said particles so to as to form a monomolecular layer completely covering said surface (measurement according to the BET method, AFNOR standard X11-621 and 622 or ISO 9277).

*The inorganic additive for reducing odour and/or increasing stiffness*

The inorganic additive is used to reduce the odour of a filled composition comprising a substrate and a mineral filler. The inorganic additive may reduce the odour by reducing (e.g., preventing) the generation of odour and/or by adsorbing or absorbing odour that is generated. As discussed below, the inorganic additive may also serve to increase the stiffness of the filled composition, which may be a filled polymer composition. The inorganic additive is used to reduce the odour of a composition comprising a substrate, wherein the inorganic additive is other than wollastonite.

The inorganic additive and mineral filler are distinct components. By "distinct" is meant that the inorganic additive and mineral filler are different chemical species, or different forms of the same chemical species, for example, a combination of a synthetic and naturally-occurring mineral.

The inorganic additive is a mineral additive other than the mineral filler. The inorganic additive, for example, mineral additive, is a silica-containing or silicate mineral. The mineral additive is a silica-containing or silicate mineral other than wollastonite. In certain embodiments, the inorganic additive, for example, mineral additive, is not an inosilicate. In certain embodiments, the inorganic additive, for example, mineral additive, is not single chain inosilicate. In certain embodiments, the inorganic additive, for example, mineral additive, is not a double chain inosilicate. The mineral filler comprises or is talc and the inorganic additive is other than wollastonite.

In certain embodiments, the inorganic additive, for example, mineral additive, is a non-acicular, non-needle, or non-needle like particulate. Wollostanite is an example of a needle-like particulate. In certain embodiments, the inorganic additive, for example, mineral additive, has a blocky or substantially spherical particle morphology.

In certain embodiments, the inorganic additive comprises, consists essentially of, or consists of, or is, a silicate mineral, for example, an alkaline earth metal silicate, for example, a calcium silicate (e.g., $CaSiO_3$). In certain embodiments, the silicate mineral is synthetic, for example, a synthetic calcium silicate.

In certain embodiments, the inorganic additive comprises, consists essentially of, or consists of, or is, a silica-containing mineral, for example, diatomaceous earth (D.E.). In certain embodiments, the D.E. is a flux calcined D.E. Suitable fluxes include alkali metal carbonates such as, for example, sodium carbonate.

In certain embodiments, the inorganic additive is a combination of a silica-containing and silicate mineral, for example, a combination of calcium silicate and D.E., or a combination of synthetic calcium silicate and flux calcined D.E.

In certain embodiments, the inorganic additive, for example, mineral additive has a particle size distribution. In certain embodiments, the inorganic additive, for example, mineral additive, has a $d_{50}$ of from about 1 $\mu$m to about 150 $\mu$m, for example, from about 2 $\mu$m to about 135 $\mu$m, or from about 5 $\mu$m to about 120 $\mu$m.

In certain embodiments, for example, embodiments in which the inorganic additive is a calcium silicate, the inorganic additive has a $d_{50}$ of from about 5 $\mu$m to about 50 $\mu$m, for example, from about 10 $\mu$m to about 40 $\mu$m, or from about 10 $\mu$m to about 30 $\mu$m, or from about 15 $\mu$m to about 25 $\mu$m, or from about 15 $\mu$m to about 20 $\mu$m.

In certain embodiments, for example, embodiments in which the inorganic additive is a diatomaceous earth, the inorganic additive has a $d_{50}$ of from about 2 $\mu$m to about 130 $\mu$m, for example, from about 5 $\mu$m to about 120 $\mu$m.

In such embodiments, the particle size of the inorganic additive may be determined by CILAS granulometry.

In certain embodiments, the inorganic additive, for example, mineral additive, has a specific surface area (BET) of from about 50 $m^2$/g to about 150 $m^2$/g, for example, from about 75 $m^2$/g to about 125 $m^2$/g, or from about 80 $m^2$/g to about 110 $m^2$/g, or from about 90 $m^2$/g to about 100 $m^2$/g.

*The functional filler*

The composition comprises a functional filler which is a mineral filler. In certain embodiments, the composition comprises both functional filler and inorganic additive, either or both of which may be surface treated.

The mineral filler may or may not be surface treated. In certain embodiments, the mineral filler is not surface treated. In certain embodiments, if the mineral filler is surface treated, the surface treatment agent does not comprise a polymeric species comprising one or more ether linkages.

The mineral filler may be coated or uncoated. In certain embodiments, the mineral filler is coated. In certain embodiments, the mineral filer is uncoated. In certain embodiments in which the mineral filler comprises or is talc, the talc is uncoated.

A surface treated functional filler may be used to reduce the odour of a composition comprising a substrate, for example, a polymer composition.

In certain embodiments, the surface treatment comprises a mixture, blend or combination of different surface treatment agents. In certain embodiments, the surface treatment consists of only one surface treatment agent. In certain embodiments, the surface treatment consists of a mixture, blend or combination of two different surface treatment agents. In certain embodiments, the surface treatment consists of a mixture, blend or combination of three different surface treatments agents, or more than three different surface treatment agents.

In certain embodiments, the surface treatment agent comprises a polymeric species which comprises one more ether linkages.

In certain embodiments, the polymeric species comprising one or more ether linkages is a polyether or a derivative thereof.

In certain embodiments, the surface treatment agent consists essentially of, or consists of, the polymeric species comprising one or more ether linkages, e.g., polyether and/or polyether modified polysiloxane.

In certain embodiments, the polyether is a polyoxyalkylene (POA), for example, polyalkylene glycol (PAG) or polyalkylene oxide (PAO). As used herein, the term 'polyalkylene glycol' means a POA having a number average molecular mass below 20,000 g/mol, and the term 'polyalkylene oxide' means a POA having a number average molecular mass above 20,000 g/mol. In certain embodiments, the surface treatment agent comprises or is a polyalkylene glycol having a number average molecular mass of from about 100 to about 15,000 g/mo, for example, from about 200 to about 10,000 g/mol, or from about 500 to about 9000 g/mol, or from about 1000 to about 9000 g/mol, or from about 2000 to about 900 g/mol, or from about 4000 to about 9000 g/mol, or from about 6000 to about 9000 g/mol, or from about 6000 to about 8500 g/mol.

In certain embodiments, the polyether is a polyalkylene oxide selected from one or more of paraformaldehyde (polymethylene oxide), polytetramethylene glycol, polytetramehtylene ether glycol, polyethylene oxide, polypropylene oxide, polybutylene oxide, and combinations thereof.

In certain embodiments, the surface treatment agent comprises or is polyethylene glycol. In certain embodiments, the surface treatment comprises or is a mixture of polyethylene glycol and polypropylene glycol (PPG). In certain embodiments, the surface treatment agent is polyethylene glycol having a number average molecular mass of from about 200 to about 10,000 g/mol, for example, from about 500 to about 9000 g/mol, or from about 1000 to about 9000 g/mol, or from about 2000 to about 900 g/mol, or from about 4000 to about 9000 g/mol, or from about 6000 to about 9000 g/mol, or from about 6000 to abut 8500 g/mol. An exemplary PEG includes the Puriol™ range of polyglycols from BASF, for example, Puriol™ 8005.

In certain embodiments, the polyether comprises or is an aromatic polyether, for example, polyphenyl ether or poly(p-phenylene oxide).

In certain embodiments, the surface treatment does not comprise, or the surface treatment agent is not, an aromatic polyether. In certain embodiments, the surface treatment does not comprise, or the surface treatment agent is not, a polyphenyl ether or poly(p-phenylene oxide).

In certain embodiments, the surface treatment does not comprise, or the surface treatment agent is not, an octyl- or nonylphenol/poly(ethylene oxide) condensate.

In certain embodiments, the polymeric species comprising one or more ether linkages is a polyether modified polysiloxane. Advantageously, the polyether modified polysiloxane is derived from a linear polysiloxane. In certain embodiments, the polyether modified polysiloxane is derived from poly(dimethylsiloxane), poly(hexamethyldisiloxane), poly(octamethyltrisiloxane), poly(decamethyltetrasilozne), or combinations thereof. The modifying polyether may be any of the polyether species described above. In certain embodiments, the modifying polyether is a polyalkylene glycol, for example, one or more of polymethylene glycol, polyethylene glycol and polybutylene glycol. In certain embodiments, the modifying polyether is polyethylene glycol (PEG), for example, PEG having a molecular weight in the range of from about 200 to about 10,000 g/mol. In certain embodiments, the polyether modified siloxane is a PEG-modified polysiloxane. Exemplary PEG-modified polysioxanes include the Dynasylan™ range from Evonik, for example, Dynasylan™ 4144.

In certain embodiments, the surface treatment comprises at least one siloxane. In general, siloxanes are any of a class of organic or inorganic chemical compounds comprising silicon, oxygen, and often carbon and hydrogen, based on the general empirical formula of $R_2SiO$, where R may be an alkyl group. Exemplary siloxanes include, but are not limited to, dimethylsiloxane, methylphenylsiloxane, methylhydrogen siloxane, methylhydrogen polysiloxane, methyltrimethoxysilane, octamethylcyclotetrasiloxane, hexamethyldisiloxane, diphenylsiloxane, and copolymers or blends of copolymers of any combination of monophenylsiloxaneunits, diphenylsiloxane units, phenylmethylsiloxane units, dimethylsiloxane units, monomethylsiloxane units, vinylsiloxane units, phenylvinylsiloxane units, methylvinylsiloxane units, ethylsiloxane units, phenylethylsiloxane units, ethylmethylsiloxane units, ethylvinylsiloxane units, or diethylsiloxane units.

In certain embodiments, the surface treatment comprises an amine, or a amine derivative. In certain embodiments, the surface treatment comprises an alkylated amine, for example, an alkylated alkyl amine such, as for example, an ethylated alkyl amine. In certain embodiments, the surface treatment comprises an alkoxylated amine, for example, an ethoxylated amine, or an alkoxylated alkyl amine, such as, for example, an ethoxylated alkyl amine.

In certain embodiments, the surface treatment comprises a polyalkylene glycol (PAG) and amine, for example, a PAG, an alkoxylated amine and a siloxane. In certain embodiments, the surface treatment comprises PAG (e.g., PEG), ethoxylated alkyl amine a siloxane. In certain embodiments, the surface treatment consists essentially or consists of the aforementioned surface treatment agents.

In certain embodiments, if the functional filler is surface treated, the functional filler is other than HAR talc. In certain embodiments, if the functional filler is a surface treated talc, the talc is other than HAR talc.

Based on the weight of the functional filler (or inorganic additive), the surface treated functional filler (or inorganic additive) may comprise from about 0.1 to about 10 % by weight surface treatment agent, for example, from about 0.1 to about 8 % by weight surface treatment agent, or from about 0.1 to about 6 % by weight, or from about 0.1 to about 5 % by weight, or from about 0.2 to about 5 % by weight, or from about 0.1 to about 4 % by weight, or from about 0.1 to about 3 % by weight, or from about 0.1 to about 2 % by weight, or from about 0.1 to about 1. 5 % by weight, or from about 0.1 to about 1 % by weight, or from about 0.1 to about 0.5 % by weight, or from about 0.2 to about 0.8 % by weight, or from about 0.3 to about 0. 7 % by weight, or from about 0.4 to about 0.6 % by weight surface treatment agent.

In certain embodiments, the functional filler which is a mineral filler has a particle size distribution. In certain embodiments, the mineral filler has a dso of from about 0.1 to about 20 $\mu$m, for example, from about 0.5 $\mu$m to about 18 $\mu$m, or from about 1.0 $\mu$m to about 16 $\mu$m, or from about 1.0 $\mu$m to about 14 $\mu$m, or from about 1.5 to about 12 $\mu$m, or from about 2.0 $\mu$m to about 10 $\mu$m, or from about 2.5 $\mu$m to about 9.0 $\mu$m, or from about 3.0 $\mu$m to about 8.0 $\mu$m, or from about 3.0 $\mu$m to about 7.0 $\mu$m, or from about 3.5 $\mu$m to about 6.5 $\mu$m, or from about 4.0 $\mu$m to about 6.0 $\mu$m, or from about 4.5 $\mu$m to about 5.5 $\mu$m, or from about 2.5 $\mu$m to about 5.0 $\mu$m, or from about 3.0 $\mu$m to about 4.0 $\mu$m. In certain embodiments, the functional filler which is a mineral filler has a $d_{50}$ of equal to or no greater than about 20 $\mu$m, for example, equal to or no greater than about 15 $\mu$m, or equal to or no greater than about 10 $\mu$m, or equal to or no greater than about 8 $\mu$m, or equal to or no greater than about 6 $\mu$m. In such embodiments, the mineral filler may have a dso of at least about 0.05 $\mu$m, or at least about 0.1 $\mu$m, or at least 0.5 $\mu$m, or at least about 1.0 $\mu$m.

Additionally, or alternatively, the functional filler which is a mineral filler has a $d_{95}$ of equal to or no greater than about 50 $\mu$m, for example, equal to or no greater than about 45 $\mu$m, or equal to or no greater than about 40 $\mu$m, or equal to or no greater than about 35 $\mu$m, or equal to or no greater than about 30 $\mu$m, or equal to or no greater than about 25 $\mu$m, or equal to or no greater than about 20, or equal to or no greater than about 15 $\mu$m. In certain embodiments, the $d_{95}$ is at least about 5 $\mu$m, for example, at least about 7.5, or at least about 10 $\mu$m. In certain embodiments, the $d_{95}$ is from about 5 $\mu$m to about 30 $\mu$m, for example, from about 5 $\mu$m to about 25 $\mu$m, or from about 7.5 $\mu$m to about 25 $\mu$m, or from about 7.5 $\mu$m to about 30 $\mu$m, or from about 10 $\mu$m to about 20 $\mu$m, or from about 12 $\mu$m to about 18 $\mu$m, or from about 8 $\mu$m to about 14 $\mu$m.

In certain embodiments, the functional filler which is a mineral filler has a dso of from about 1.0 $\mu$m to about 10 $\mu$m, and a $d_{95}$ of from about 10 $\mu$m to about 20 $\mu$m, for example, a $d_{50}$ of from about 3 to about 7 $\mu$m, and a $d_{95}$ of from about 12 to about 18 $\mu$m, or a $d_{50}$ of from about 2 to about 6 $\mu$m, and a $d_{95}$ of from about 8 to about 12 $\mu$m.

Additionally, or alternatively, the mineral filler may have a specific surface area (BET) of from about 0.5 m$^2$/g to about 40 m$^2$/g, for example, from about 1.0 m$^2$/g to about 30 m$^2$/g, or from about 2.0 m$^2$/g to about 20 m$^2$/g, or from about 2.0 m$^2$/g to about 15 m$^2$/g, or from about 2.0 m$^2$/g to about 10 m$^2$/g, or from about 2.0 m$^2$/g to about 8.0 m$^2$/g, or from about 2.0 m$^2$/g to about 6.0 m$^2$/g, or from about 3.0 m$^2$/g to about 6.0 m$^2$/g.

In certain embodiments, the functional filler which is a mineral filler is selected from talc, an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, mica, perlite, feldspars, nepheline syenite, wollastonite, diatomaceous earth, barite, glass, for example, glass fibres, natural or synthetic silica or silicates, and combinations thereof

The mineral filler comprises, consists essentially, or consists of, or is, a phyllosilicate mineral which is talc.

In certain embodiments, the mineral filler comprises, consists essentially, or consists of, or is, talc. As used herein, the term "talc" means either the hydrated magnesium silicate mineral, or the mineral chlorite (hydrated magnesium aluminium silicate), or a mixture of the two, optionally associated with other minerals, for example, dolomite and/or magnesite, or furthermore, synthetic talc, also known as talcose. In certain embodiments, the talc is not a synthetic talc.

In certain embodiments, the talc is the hydrated magnesium silicate mineral or the mineral chlorite, or a mixture thereof. In certain embodiments, the weight ratio of hydrated magnesium silicate to chlorite is from about 10:1 to about 1:2, for example, from about 10:1 to about 1:1, or from about 5:1 to about 1:1, or from about 4:1 to about 1:1, or from about 3:1 to about 1:1, or from about 2:1 to about 1:1, or from about 3:2 to about 1:1, or about 1:1. Optionally, the talc may further include dolomite or magnesite, or combinations thereof. The amount of dolomite and/or magnesite in the talc may be less than about 10 % by weight, based on the total weight of talc, for example, less than about 5 % by weight, or less than about 1 % by weight, or less than about 0.75 % by weight, or 0.5 % by weight or less, based on the total weight of talc.

In certain embodiments, the talc is a high aspect ratio (HAR) talc. As used herein, the term "high aspect ratio talc" means a talc particulate having a lamellarity index of greater than about 2.8. The 'lamellarity index' is defined by the following ratio:

$$\frac{d_{mean} - d_{50}}{d_{50}}$$

in which "$d_{mean}$" is the value of the mean particle size (dso) obtained by a particle size measurement by wet Malvern laser scattering (standard AFNOR NFX11-666 or ISO 13329-1) and "dso" is the value of the median diameter obtained by sedimentation using a sedigraph (standard AFNOR X11-683 or ISO 13317-3), as described below. Reference may be made to the article by G. Baudet and J. P. Rona, Ind. Min. Mines et Carr. Les techn. June, July 1990, pp 55-61, which shows that this index is correlated to the mean ration of the largest dimension of the particle to its smallest dimension. In the following description, the term "high aspect ratio talc" may be used interchangeably with the term "talc particulate having a lamellarity index of greater than about 2.8" or "talc having an aspect ratio of greater than 2.8". In certain embodiments, the talc particulate having a lamellarity index of greater than about 2.8 is further characterized by having a $d_{50}$ between about 0.5 and 5 $\mu$m, a $d_{95}$ of less than about 15 $\mu$m (or less than about 10 $\mu$m), a $d_{98}$ of less than about 20 $\mu$m (each determined by sedigraph, as described below), and a specific surface area (BET) of greater than about 10 m$^2$/g.

Exemplary talc particulates having a lamellarity index of greater than about 2.8, and methods for making same, are described in US-A-6348536.

In the Malvern laser light scattering technique referred to above, the size of particles in powders, suspensions and emulsions may be measured using the diffraction of a laser beam, based on an application of Mie theory. Such a machine, for example a Malvern Mastersizer S (as supplied by Malvern Instruments) provides measurements and a plot of the cumulative percentage by volume of particles having a size, referred to in the art as the 'equivalent spherical diameter' (e.s.d), less than given e.s.d values. The mean particle size $d_{50}$ is the value determined in this way of the particle e.s.d at which there are 50% by volume of the particles which have an equivalent spherical diameter less than that dso value.

In certain embodiments, the high aspect ratio talc has a lamellarity index of greater than about 3.0, for example, greater than about 3.2, or greater than about 3.4, or greater than about 3.6, or greater than about 3.8, or greater than about 4.0, or greater than about 4.2, or greater than about 4.4. In certain embodiments, the lamellarity index is less than about 5.0, for example, less than about 4.5, or less than about 4.2. Similarly, in certain embodiments, the high aspect ratio may be defined as a talc particulate having a lamellarity index of greater than about 3.0, for example, greater than about 3.2, or greater than about 3.4, or greater than about 3.6, or greater than about 3.8, or greater than about 4.0. In certain embodiments, the talc particulate has a lamellarity index of less than about 5.0, for example, less than about 4.5, or less than about 4.2. Similarly, in certain embodiments, the high aspect ratio talc may be defined as talc having an aspect ratio of greater than about 3.0, for example, greater than about 3.2, or greater than about 3.4, or greater than about 3.6, or greater than about 3.8, or greater than about 4.0. In certain embodiments, the talc has an aspect ratio of less than about 5.0, for example, less than about 4.5, or less than about 4.2.

In certain embodiments, the talc is a micronized talc, for example, having a $d_{98}$ of no greater than about 15 $\mu$m, or no greater than about 12 $\mu$m, or no greater than about 10 $\mu$m, or no greater than about 8 $\mu$m, or no greater than about 6 $\mu$m, or no greater than about 4 $\mu$m, or no greater than about 2 $\mu$m.

As discussed above, UV exposure through sunlight may affect materials used in automotive parts, for example, through polymer degradation which can adversely affect the colour, shape and/or mechanical properties (e.g., tensile strength) of the materials used. In certain embodiments in which the substrate is polymeric, this particular type of polymer degradation may be referred to as photo-degradation, photo-induced degradation or UV degradation.

A surface treated filler may be incorporated in the composition comprising a substrate to maintain, ameliorate or improve the UV stability of the composition. If the filler is talc it may be in particulate form having a lamellarity index of greater than 1.0, for example, at least about 1.5, or at least about 2.0, or at least about 2.5.

A surface treated filler may be incorporated in the composition comprising a substrate to retard or reduce degradation of the composition upon exposure to UV radiation. If the filler is talc it may be in particulate form having a lamellarity index of greater than 1.0, for example, at least about 1.5, or at least about 2.0, or at least about 2.5.

UV stability or, conversely, the extent of degradation owing to exposure to UV radiation may be determined in accordance with any suitable method. Improvements in UV stability and/or reduction/retardation in UV induced degradation may be determined by comparing the UV stability and/or reduction/retardation in UV induced degradation of a composition filled with the surface treated filler with a composition comprising a comparable amount of the untreated filler.

Analysis and testing of UV exposure, stability and degradation may be determined by a process known as accelerated weathering. This is the simulation of environmental conditions using special chambers and instruments to speed up the weathering process, measuring their effects on parts, components, products and materials.

One of the following testing standards may be used to determine the UV stability and/or reduction/retardation in UV induced degradation of a composition filled with the surface treated filler, and any comparator composition:

- ASTM D4587: American Society for Testing and Materials (ASTM) standard practice for fluorescent UV-condensation exposures of paint and related coatings (QUV)

- ASTM D4329: ASTM standard practice for fluorescent UV lamp apparatus exposure of plastics

- ASTM D4329: ASTM standard practice for Xenon arc testing of automotive coatings

- ISO 4892: International Organization for Standardization (ISO) method specification for exposing specimens to Xenon-arc light in the presence of moisture—to reproduce the weathering effects that occur when materials are exposed in actual end-use environments

- SAE J2020: Society of Automotive Engineers (SAE) method specification for operating conditions of fluorescent ultraviolet (UV) and condensation apparatus—used for the accelerated exposure of various automotive exterior components

- SAE J2527: SAE method specification for operating conditions of Xenon arc testing of automotive exterior components.

- SAE J2412: SAE method specification for operating conditions of Xenon arc testing of automotive interior components

In certain embodiments, the filler is a mineral filler in particulate form, and may be a HAR mineral filler, i.e., a particulate filler having a lamellarity index of greater than about 2.8.

In certain embodiments, the mineral filler is a HAR talc, for example, a HAR talc as described herein in relation to other aspects and embodiments.

The substrate may be a polymer or polymer blend or blend of polymer(s) and elastomer, paint or paint base, paper, paperboard or composite, as described herein.

In certain embodiments, the substrate is a polymer or polymer blend or blend of polymer(s) and elastomer, as described herein. The polymer or polymer blend or blend of polymer and elastomer may comprise polypropylene.

In certain embodiments, the polymer comprises, consists essentially, or consists of, or is, polypropylene.

In certain embodiments, the composition is in the form of an article formed from the polymer or polymer blend or blend of polymer(s) and elastomer, as described herein, for example, an automotive part, such as an interior or exterior part, for example, dashboard, interior trim, or interior body panel.

In certain embodiments, the surface treated filler is present in an amount of at least about 1 wt. %, based on the total weight of the filled composition, for example, at least about 5 wt. %, or at least about 10 wt. %, or at least about 15 wt. % or at least about 20 wt. % or at least about 25 wt. % or at least about 30 wt. %, or at least about 35 wt. %, or at least about 40 wt. %, or at least about 45 wt. %, or at least about 50 wt.%. In certain embodiments, the surface treated filler is present in an amount of from about 10 wt. % to about 40 wt. %, based on the total weight of the filled composition, for example, from about 20 wt. % to about 35 wt. %, or from about 25 wt. % to about 35 wt. %, or from about 20 wt. % to about 30 wt. %, or from about 30 wt. % to about 40 wt. %.

In such embodiments, the substrate, i.e., the polymer or polymer blend or blend of polymer(s) and elastomer, may be present in an amount of from about 30 wt. % to about 99 wt. %, based on the total weight of the filled composition, for example, from about 40 wt. % to about 95 wt. %, or from about 50 wt. % to about 90 wt. %, or from about 50 wt. % to about 80 wt. %, or from about 50 wt. % to about 70 wt. %. In certain embodiments, the substrate is present in an amount of at least about 50 wt. %, or at least about 55 wt. %, or at least about 60 wt. %, or at least about 65 wt. %, or at least about 70 wt. %, or at least about 75 wt. %, or at least about 80 wt. %, or at least about 85 wt. %, or at least about 90 wt. %, based on the total weight of the filled composition. Based on the weight of the surface treated filler, the surface treated filler may comprise from about 0.1 to about 10 % by weight surface treatment agent, for example, from about 0.1 to about 8 % by weight surface treatment agent, or from about 0.1 to about 6 % by weight, or from about 0.1 to about 5 % by weight, or from about 0.2 to about 5 % by weight, or from about 0.1 to about 4 % by weight, or from about 0.1 to about 3 % by weight, or from about 0.1 to about 2 % by weight, or from about 0.1 to about 1. 5 % by weight, or from about 0.1 to about 1 % by weight, or from about 0.1 to about 0.5 % by weight, or from about 0.2 to about 0.8 % by weight, or from about 0.3 to about 0. 7 % by weight, or from about 0.4 to about 0.6 % by weight surface treatment agent.

In certain embodiments, the surface treatment agent is a surface treatment agent as described above, and combinations thereof.

In certain embodiments, the surface treatment comprises or is a PAG, for example, PEG, or alkyl sulfonate, for example, a $C_{10}$-$C_{20}$ alkyl sulfonate, or a $C_{14}$-$C_{17}$ alkyl sulfonate, or a mixture thereof.

*The substrate*

The substrate is a polymer. In certain embodiments, the substrate is a polymer, for example, a plastic, rubber or foam (e.g., a polyurethane foam). Hereinafter, the filled composition may be described in terms of a filled polymer composition, but this is no way limiting.

In certain embodiments, the substrate is a natural or synthetic polymer or a mixture thereof. The polymer may, for example, be thermoplastic or thermoset. The term "polymer" used herein includes homopolymers and/or copolymers, as well as crosslinked and/or entangled polymers.

The term "precursor" as may be applied to the polymer component will be readily understood by one of ordinary skill in the art. For example, suitable precursors may include one or more of: monomers, cross-linking agents, curing systems comprising cross-linking agents and promoters, or any combination thereof. Where, according to the present invention, the mineral filler and/or inorganic additive are mixed with precursors of the polymer, the polymer composition will subsequently be formed by curing and/or polymerising the precursor components to form the desired polymer.

Polymers, including homopolymers and/or copolymers, comprised in the polymer composition of the present invention may be prepared from one or more of the following monomers: acrylic acid, methacrylic acid, methyl methacrylate, and alkyl acrylates having 1-18 carbon atoms in the alkyl group, styrene, substituted styrenes, divinyl benzene, diallyl phthalate, butadiene, vinyl acetate, acrylonitrile, methacrylonitrile, maleic anhydride, esters of maleic acid or fumaric acid, tetrahydrophthalic acid or anhydride, itaconic acid or anhydride, and esters of itaconic acid, with or without a cross-linking dimer, trimer, or tetramer, crotonic acid, neopentyl glycol, propylene glycol, butanediols, ethylene glycol, diethylene glycol, dipropylene glycol, glycerol, cyclohexanedimethanol, 1,6 hexanediol, trimethyolpropane, pentaerythritol, phthalic anhydride, isophthalic acid, terephthalic acid, hexahydrophthalic anyhydride, adipic acid or succinic acids, azelaic acid and dimer fatty acids, toluene diisocyanate and diphenyl methane diisocyanate.

The polymer may be selected from one or more of polymethylmethacrylate (PMMA), polyacetal, polycarbonate, polyvinyls, polyacrylonitrile, polybutadiene, polystyrene, polyacrylate, polyethylene, polypropylene, epoxy polymers, unsaturated polyesters, polyurethanes, polycyclopentadienes and copolymers thereof. Suitable polymers also include liquid rubbers, such as silicones.

The polymers which may be used in accordance with the invention are advantageously thermoplastic polymers. Thermoplastic polymers are those which soften under the action of heat and harden again to their original characteristics on cooling, that is, the heating-cooling cycle is fully reversible. By conventional definition, thermoplastics are straight and branched linear chain organic polymers with a molecular bond. Examples of polymers which may be used in accordance with the invention include, but are not limited to polyethylene, for example, linear low density polyethylene (LLDPE) and medium density grades thereof, high density polyethylene (HDPE), low density polyethylene (LDPE), polypropylene (PP), polyethylene terephthalate (PET), vinyl/polyvinyl chloride (PVC), polystyrene, and mixtures thereof.

In certain embodiments, the polymer is a polyalkylene polymer, for example, polyethylene, polypropylene, polybutylene, or a copolymer of two or more of ethylene, propylene and butylenes monomers, for example, an ethylene-propylene copolymer. In certain embodiments, the polymer is a mixture of two or more of propylene, polyethylene and ethylene-propylene copolymer, for example a mixture of propylene and polyethylene.

In certain embodiments, the polymer comprises, consists essentially of, or consists of polypropylene or polyethylene or a mixture of polypropylene and polyethylene.

In certain embodiments, the polymer comprises a blend of polymers. In certain embodiments, the polymer comprises or is an elastomer, or a blend of elastomers. In certain embodiments, the polymer is a blend of polymers, including one or more elastomers.

In certain embodiments, the polymer, or at least a portion thereof, is recycled polymer. The polymer may be a mixture of recycled and virgin polymer. In certain embodiments, at least 10 % by weight of the polymer is recycled (that is, based on the total weight of the polymer in the filled polymer composition), for example, at least about 20 % by weight, or at least about 30 % by weight, or at least about 40 % by weight, or at least about 50 % by weight, or at least about 60 % by weight, or at least about 70 % by weight, or at least about 80 % by weight, or at least about 90 % by weight, or at least about 95 % by weight, or at least about 99 % by weight of the polymer is recycled. In certain embodiments, essentially 100 % by weight of the polymer is recycled polymer, i.e., the polymer and, thus, the filled polymer composition, is free of virgin polymer. In certain embodiments, essentially 100 % by weight of the polymer is virgin polymer, i.e., the polymer and, thus, the filled polymer composition, is free of recycled polymer.

In certain embodiments, the substrate is present in an amount of from about 30 wt. % to about 99 wt. %, based on the total weight of the filled composition, for example, from about 40 wt. % to about 95 wt. %, or from about 50 wt. % to about 90 wt. %, or from about 50 wt. % to about 80 wt. %, or from about 50 wt. % to about 70 wt. %. In certain embodiments, the substrate is present in an amount of at least about 50 wt. %, or at least about 55 wt. %, or at least about 60 wt. %, or at least about 65 wt. %, or at least about 70 wt. %, or at least about 75 wt. %, or at least about 80 wt. %, or at least about 85 wt. %, or at least about 90 wt. %, based on the total weight of the filled composition.

In certain embodiments, the polymer has a melt flow rate (MFR) of from about 0.1 to about 100.0 g/10 min @ 230°C/2.16 kg, for example, from about 1.0 to about 80.0 g/10 min @ 230°C/2.16 kg, from about 1.0 to about 60.0 g/10 min @ 230°C/2.16 kg from about 1.0 to about 40.0 g/10 min @ 230°C/2.16 kg, or from about 1.0 to about 20.0 g/10 min @ 230°C/2.16 kg, or from about 2.0 to about 15.0 g/10 min @ 230°C/2.16 kg, or from about 3.0 to about 12.0 g/10 min @ 230°C/2.16 kg, or from about 4.0 to about 10.0 g/10 min @ 230°C/2.16 kg, or from about 5.0 to about 10.0 g/10 min @ 230°C/2.16 kg, or from about 6.0 to about 10.0 g/10 min @ 230°C/2.16 kg. In such embodiment, the polymer may be a polyalkylene polymer, for example, polypropylene. MFR may be determined in accordance with ISO 1133.

In certain embodiments, the substrate is a rubber or rubber precursor.

In certain embodiments, and the substrate is a base or precursor or a foam, for example, a polyurethane foam.

Also described is a filled composition which is a functional composition other than a polymer composition as described above. For example, the functional composition may be a paint, non-polymeric composite, paper or paper board.

Also described is a functional composition which is a composite and the substrate may be, for example, a concrete or mortar or cement, or a composite of two or more materials including, for example, a laminate.

Also described is a functional composition which is a paint and the substrate is a base for paint. Also described is a functional composition which is a dried paint, e.g., following application to a surface.

Also described is a functional composition which is a paper or paper board, and the substrate is a fibrous material (e.g., cellulose derived composition) suitable for use in a paper-making or paper-board-making composition.

The inorganic additive may be used for reducing emissions (e.g., including odour release) from a functional composition, for example, a paint, a non-polymeric composite, paper, paper board, and the like, optionally wherein the functional composition comprises talc as a filler.

*The filled composition*

The inorganic additive is present in the filled composition in an amount sufficient to reduce the odour of the filled composition absent the inorganic additive, i.e., compared to the filled composition without inorganic additive, the filled composition with inorganic additive is less odorous.

Alternatively, the filled composition comprising inorganic additive may be characterized as having a first odour which is less than a second odour of a comparable filled composition absence the inorganic additive, i.e., which does not contain any inorganic additive.

Odour may be determined in accordance with any suitable method. As discussed above, in certain embodiments, odour is determined in accordance with VDA 270, for example, VDA 270 (variant C3).

In certain embodiments, the inorganic additive is present in a sufficient amount in order to reduce the odour by at least about 0.5 units according to standard VDA 270, for example, by at least about 0.6 units, or at least about 0.7 units, or at least about 0.8 units, or at least about 0.9 units, or at least about 1.0 units, or at least about 1.1 units, or at least about 1.2 units, or by at least about 1.3 units. In certain embodiments, the inorganic additive is present in a sufficient amount in order to reduce the odour by from about 0.5 units to about 2.0 units according to standard VDA 270, for example, from about 0.5 units to about 1.8 units, or from about 0.5 units to about 1.6 units, or from about .5 units to about 1.5 units, or from about 0.6 units to about 1.5 units, or from about 0.7 units to about 1.5 units, or from about 0.8 units to about 1.5 units, or from about 0.9 units to about 1.5 units, or from about 1.0 units to about 1.5 units.

Additionally or alternatively, the inorganic additive is present in a sufficient amount in order to reduce (i.e., relative to the filled composition absent the additive) the odour by at least about 10 %, for example, by at least about 15 %, or by at least about 20 %, or by at least about 30 %, or by at least about 40 %. In certain embodiments, the odour is reduced by no more than about 75 %, for example, by no more than about 50 %.

In certain embodiments, the filled composition comprising the inorganic additive has a odour of equal to or less than about 4.0 according to VDA 270, for example, equal to or less than about 3.9, or equal to or less than about 3.7, or equal to or less than about 3.6, or equal to or less than about 3.5, or equal to or less than about 3.4, or equal to or less than about 3.3, or equal to or less than about 3.2, or equal to or less than about 3.1, or equal to or less than about 3.0. In certain embodiments, the inorganic additive is present in amount sufficient to reduce the odour of the filled composition to, or below, that of the composition absent the mineral filler.

In certain embodiments, the first odour is at least 0.5 units according to standard VDA 270 lower than the second odour, for example, at least about 1.0 units lower, or at least about 1.5 units lower. In certain embodiments, the first odour is about 10 % lower than the second odour, for example, at least about 15 % lower, or by at least about 20 % lower, or by at least about 30 % lower, or by at least about 40 % lower.

The addition of the inorganic additive may serve to maintain or enhance the stiffness of the filled composition. In certain embodiments, the inorganic additive is present in a sufficient amount to increase (i.e., relative to the filled composition absent the inorganic additive) the stiffness of the filed composition by at least about 0.2 %, for example, by at least about 0.5 %, or at least about 0.75 %, or at least about 1.0 %, or at least about 1.25 %, or at least about 1.5 %, or at least about 1.75 %, or at least about 2.0 %.

In certain embodiments, stiffness of the filled composition or article formed therefrom is determined by measuring its flexural modulus in accordance with ISO 178, and is at least about 5 MPa greater than the flexural modulus of the filled polymer absent the inorganic additive, for example, at least about 10 MPa greater, or at least about 25 MPa greater, or at least about 50 MPa greater, or at least about 75 MPa greater, or at least about 100 MPa greater.

In certain embodiments, the filled composition and/or article formed therefrom has stiffness, as determined by measuring its flexural modulus in accordance with ISO 178, of at least about 1400 MPa, for example, at least about 1600 MPa, or at least about 1800 MPa, or at least about 2000 MPa, or at least about 2250 MPa, or at least about 2500 MPa, or at least about 2750 MPa, or at least about 3000 MPa.

Alternatively, the filled composition comprising inorganic additive may be characterized as having a first stiffness which is greater than a second stiffness of a comparable filled composition absence the inorganic additive, i.e., which does not contain any inorganic additive. In certain embodiments, the first stiffness is at least about 5 MPa greater than the second stiffness (as may be determined by measuring flexural modulus in accordance with ISO 178), for example, at least about 10 MPa greater, or at least about 25 MPa greater, or at least about 50 MPa greater, or at least about 75 MPa greater, or at least about 100 MPa greater. In certain embodiments, the first stiffness is at least about 0.2 % greater than the second stiffness, for example, at least about 0.5 % greater, or at least about 0.75 % greater, or at least about 1.0 % greater, or at least about 1.25 % greater, or at least about 1.5 % greater, or at least about 1.75 % greater, or at least about 2.0 % greater.

In certain embodiments, the stiffness of the filled composition or article formed therefrom is not adversely affected by addition of the inorganic additive, as determined by measuring its flexural modulus in accordance with ISO 178. For example, in certain embodiments, the stiffness of the filled composition or article formed therefrom is at least about 90 % of the stiffness of the filled composition or article formed therefrom absent the inorganic additive, for example, at least about 92 %, or at least about 95 %, or at least about 96 %, or at least about 97 %, or at least about 98 %, or at least about 99 % of the stiffness of the filled composition or article formed therefrom absent the inorganic additive.

In certain embodiments, other mechanical or physical properties of the filled polymer composition and/or article formed therefrom are not adversely affected and may even be enhanced by the addition of the inorganic additive. For example, in certain embodiments, the impact strength of the filled composition comprising inorganic additive, for example, the filled polymer composition, is at least about 75 % of the impact strength of the filled polymer composition absent the inorganic additive. In certain embodiments, the impact strength of the filled polymer composition comprising inorganic additive and/or article formed therefrom is at least about 80 %, or at least about 85 %, or at least about 90 %, or at least about 95 %, or at least 99 % of impact strength of the filled composition absent the inorganic additive. In certain embodiments, the addition of inorganic additive has no discernible affect (i.e., within the limits of experimentation) on impact strength. In certain embodiments, impact strength is the measure of unnotched Charpy impact strength at -20 °C in accordance with ISO 179, which is described in more detail in the Examples below.

In certain embodiments, the filled polymer compositions and/or articles formed therefrom may be characterized in terms of a Heat Distortion Temperature (HDT). This property may be determined in accordance with ISO 75A, which is described in more detail in the Examples below. In certain embodiments, the filled polymer composition and/or article formed therefrom has a HDT which is comparable to the filled polymer composition and/or article formed therefrom absent the inorganic additive. In certain embodiments, the filled polymer composition and/or article therefore has an HDT which is greater than the filled polymer composition/article absent the inorganic additive, for example, at least about 0.5 °C greater, or at least about 1.0 °C greater, or at least about 1.5°C greater.

In certain embodiments, the addition of inorganic additive to the filled polymer composition does not adversely affect the colour of the filled polymer composition and/or article formed therefrom. Colour may be determined in accordance with the CIELAB System. In certain embodiments, the lightness, $L^*$ of the filled polymer is within about 5 % of the $L^*$ of the filled composition absent the inorganic additive, for example, within about 4 %, or within about 3 %, or within about 2 %, or within about 1 %, or within about 0. 5 %, or essentially equal to, the $L^*$ of the filled composition absent the inorganic additive.

In certain embodiments, the inorganic additive is present in an amount of at least about 0.2 wt. %, based on the total weight of the filled composition. In such embodiments, the inorganic additive may be a mineral additive, for example, a flux calcined D.E. and/or a synthetic calcium silicate. In such embodiments, the mineral filler may be talc, and may be present in amount of at least about 10 wt. % based on the total weight of the filled composition. In certain embodiments, the inorganic additive is present in an amount of at least about 0. 3 wt.

%, based on the total weight of the filed composition, for example, at least about 0.3 wt. %, or at least about 0.4 wt. %, or at least about 0.5 wt. %, or at least about 0.75 wt. %, or at least about 1.0 wt. %, or at least about 1.25 wt. %, or at least about 1.5 wt. %, or at least about 2.0 wt. %, or at least about 2.5 wt. %. In certain embodiments, the inorganic additive is present in an amount of no more than about 10 wt. %, based on the total weight of the filled composition, for example, no more than about 8.0 wt. %, or no more than about 6.0 wt. %, or no more than about 4.0 wt. %, or no more than about 3.0 wt. %, based on the total weight of the filled composition.

In certain embodiments, the mineral filler, for example, talc, is present in the filled composition in amount of at least about 5 wt. %, based on the total weight of the filled composition, for example, filled polymer composition. In certain embodiments, the mineral filler is present in an amount of at least about 10 wt. %, or at least about 15 wt. %, or at least about 20 wt. %, or at least about 25 wt. %, or at least about 30 wt. %, or at least about 35 wt. %, or at least about 40 wt. %, or at least about 45 wt. %, or at least about 50 wt. %. In certain embodiments, the mineral filler is present an amount of from about 10 wt. % to about 70 wt. %, or from about 10 wt. % to about 60 wt. %, or from about 10 wt.% to about 50 wt. %, or from about 10 wt. % to about 40 wt. %, or from about 10 wt. % to about 30 wt. %, or from about 15 wt. % to about 25 wt. %.

The filed composition may comprise auxiliary components, such as, for example, processing aids including, for example, stabilizer, diluent, lubricant, curing agent, mould release agent, slip aid, dispersant, antioxidant, colourant and the like.

In certain embodiments, the filled composition further comprises a stabilizer and antioxidant, for example, a aryl phosphite (e.g., a trisarylphosphite such as tris(2,4-ditert-butylphenyl)phosphite) and a sterically hindered phenol antioxidant (e.g., pentaerythritol tetrakis(3-(3,5-di-tert-butyl-4-hydroxyphenol)propionate). In certain embodiments, the auxiliary components, such as stabilizer and antioxidant, may be diluted in a small amount of the mineral filler). In certain embodiments, the total amount of auxiliary components constituted no more than about 5 wt. % of the filled polymer composition, for example, no more than about 2 wt. %, or no more than about 1 wt. %, or no more than about 0.5 wt. %, or no more than about 0.25 wt. %. In certain embodiments, a package of stabilizer, antioxidant and diluent mineral filler constitute less than about 0.5 wt. % of the filled composition, with a weight ratio of stabilizer/antioxidant/mineral filler of, for example, about 1/1/4.

In certain embodiments, the filled composition is free of crystalline silica.

*Methods of manufacture*

Preparation of the filled compositions of the present invention, for example, filled polymer compositions, can be accomplished by any suitable mixing method known in the art, as will be readily apparent to one of ordinary skill in the art. Such methods include dry blending of the individual components or precursors thereof and subsequent process in a conventional manner. Certain of the ingredients can, if desired, be pre-mixed before addition to the mixture. Any additional components, such as processing aids and the like, may be included in the mixture or blend, before processing to form a final filled polymer composition or article.

In certain embodiments, the components of the filled composition, i.e., substrate, mineral filler and inorganic additive, are suitably blended, for example, dry blended, along with any additional components.

In the case of thermoplastic polymer compositions, based on a single polymer or on a blend of several polymers or on a blend of polymer(s) and at least one elastomer, such processing may comprise melt mixing, either directly in an extruder for making an article from the composition, or pre-mixing in a separate mixing apparatus. Dry blends of the individual components can alternatively be directly injection moulded without pre-melt mixing.

For the preparation of cross-linked or cured polymer compositions, the blend of uncured components or their precursors, and, if desired, the mineral filler and inorganic additive for reducing odour, will be contacted under suitable conditions of heat, pressure and/or light with an effective amount of any suitable cross-linking agent or curing system, according to the nature and amount of the polymer used, in order to cross-link and/or cure the polymer.

For the preparation of polymer compositions where the mineral filler and inorganic additive for reducing odour and any desired other component(s) are present in situ at the time of polymerisation, the blend of monomer(s) and any desired other polymer precursors, mineral filler (e.g., talc), inorganic additive, and any other component(s) will be contacted under suitable conditions of heat, pressure and/or light, according to the nature and amount of the monomer(s) used, in order to polymerise the monomer(s) with mineral filler, inorganic additive and any other component(s) in situ.

In certain embodiments, mineral filler (e.g., talc) and inorganic additive for reducing odour are dispersed (e.g., in powder, pellet, or granular form, alone or together) with agitation into a mixture comprising polymer (for example, polypropylene), and optionally a curing agent and/or stabilizer package.

The resulting dispersion can be degassed to remove entrained air. The resulting dispersion can then be poured into a suitable mould and cured. Suitable curing temperatures range from 20-200ºC, for example 20-120°C, or, for example, 60-90°C.

The starting polymer mixture can further comprise a pre-polymer (for example, propylene monomer). The pre-polymer may or may not correspond to the starting polymer.

Dispersant agents can be added to reduce the viscosity of the dispersion. Alternatively, the amount of polymer in the starting solution can be reduced.

Suitable curing agents will be readily apparent to one of ordinary skill in the art, and include organic peroxides, hydroperoxides and azo compounds. Examples of peroxide and hydroperoxide curing agents include dimethyl dibutylperoxyhexane, benzyl peroxide, dicumyl peroxide, methyl ethyl ketone peroxide, lauryl peroxide, cyclohexanone peroxide, t-butyl perbenzoate, t-butyl hydroperoxide, t-butyl benzene hydroperoxide, cumene hydroperoxide and t-butyl peroctoate.

The compounded compositions may further comprise additional components, such as slip aids (for example Erucamide), process aids (for example Polybatch® AMF-705), mould release agents and antioxidants.

Suitable mould release agents will be readily apparent to one of ordinary skill in the art, and include fatty acids, and zinc, calcium, magnesium and lithium salts of fatty acids and organic phosphate esters. Specific examples are stearic acid, zinc stearate, calcium stearate, magnesium stearate, lithium stearate calcium oleate, zinc palmitate. Typically, slip and process aids, and mould release agents are added in an amount less than about 5 wt. % based on the weight of the masterbatch. Polymer articles, including those described below, may then be extruded, compression moulded or injected moulded using conventional techniques known in the art, as will be readily apparent to one of ordinary skill in the art. Thus, as described below, the present invention is also directed to articles formed from the polymer compositions of the present invention.

In certain embodiments, the polymer composition comprises a colorant which, if present, will be added during compound of the polymer composition. The colorant may be added in the form of a masterbatch. Suitable colours are many and various.

The methods described above may include compounding and extrusion. Compounding may be carried out using a twin screw compounder, for example, a Clextral BC 21 double screw extruder 9 (having an appropriate length/diameter, for example, between 30 and 50, for example, between about 30 and 40), or a Leistritz ZSE 18 double screw extruder (having an appropriate length/diameter ratio, for example, between about 30 and 50, for example, between about 40 and 50) or Baker Perkins 25 mm twin screw compounder. The polymer, mineral filler, inorganic additive and optional additional components may be premixed and fed from a single hopper or mixed in a compounder using separate hoppers. The resulting melt may be cooled, for example, in a water bath, and then pelletized. Test pieces, e.g., charpy bars or tensile dumbbells, may be injection moulded or cast or blown into film.

The screw temperature may be between about 100 °C and about 300 °C, for example, between about 150 °C and about 280 °C, for example, between about 180 °C and about 250 °C, or between about 200 and 230 °C.

Screw speed may be between about 100 and 1200 rpm, for example, between about 300 and 1100 rpm, for example, between about 500 and 1100 rpm, for example, between about 700 and 1100 rpm, for example, between about 800 and 1000 rpm. In certain embodiments, screw speed is about 900 rpm.

Suitable injection molding apparatus includes, for example, a Billion 50T Proxima press. The polymer composition may be dried prior to molding. Drying may be carried out at any suitable temperature, for example, about 60°C, for a suitable period of time, for example, between about 1 hours and 20 hours, for example, between about 2 and 18 hours, or between about 1 and 3 hours, or between about 4 and 8 hours, or between about 12 and 18 hours. The temperature during drying may be kept constant or varied. In certain embodiments, the temperature during drying is between about 70 and 120 °C, for example, between about 80 and 100 °C, for example, about 90°C.

Molding is generally conducted at a temperature at which the polymer composition is flowable. For example, the molding temperature may be between about 100 and 300 °C, for example, between about 200 and 300 °C, or between about 240 and about 280°C. Following molding the molded piece will be allowed to cool and set.

Other suitable processing techniques include gas-assisted injection molding, calendaring, vacuum forming, thermoforming, blow-molding, drawing, spinning, film forming, laminating or any combination thereof. Any suitable apparatus may be used, as will be apparent to one of ordinary skill in the art.

*Articles of manufacture*

The polymer composition can be processed to form, or to be incorporated in, articles of commerce in any suitable way, as described herein. The articles which may be formed from the functional composition, for example, polymer composition are many and various. Examples include automotive interior article, for example, dashboard, interior trim, and interior body panel, as well as under the hood part and components. Other examples include automotive body parts and panels, for example, a bonnet (hood), wing piece, wing-mirror casing, door (front and/or rear), tail gate and bumper (front and/or rear).

**EXAMPLES**

Unless otherwise specified, the following test methods were used to characterise the materials prepared in the Examples:

*Flexural modulus*

Measured on 80 mm by 10 mm by 4 mm bars according to ISO 178.

*Charpy impact strength*

Measured on 80 mm by 10 mm by 4 mm bars according to ISO 179. Unnotched samples at -20 °C.

*Heat Distortion Temperature (HDT)*

Measured on 80 mm by 10 mm by 4 mm bars according to ISO 75A.

*Odour performance*

In accordance with Standard VDA 270
Samples were placed in hermectic bags (0.3 g/l, equating to 0.3 g of sample in 9 litres of air), then submitted to thermal cycle at 80 °C (variant C3).
Odour evaluation was performed by 5 trained persons. Each person rates the odour according to the following scale:

1 - not perceptible

2 - perceptible, not disturbing

3 - clearly perceptible, but not disturbing

4 - disturbing

5 - strongly disturbing

6 - not acceptable

The 5 ratings for each sample are then averaged.

*Colour properties*

According to CIELAB system

*Example 1 - preparation and testing of filled polymer compositions*

- Materials

*Talc mineral filler:*

PSD as measured by sedigraph (ISO 13317-3): $d_{50}$ = 5.2 $\mu$m; $d_{95}$ = 15.6 $\mu$m

PSD as measured by laser (ISO 13329-1): $d_{50}$ = 10.7 $\mu$m; $d_{95}$ = 29.6 $\mu$m

Specific surface area (BET): 3.6 $m^2$/g

Mineral composition: talc/chlorite/dolomite/calcite 50/49.0/0.5/<0.5 as measured by thermogravimetric analysis (TGA)

Weight loss at 1050 °C (by TGA): 9 %

*Inorganic additive (1):*

Flux calcined diatomaceous earth having a $d_{50}$ of about 19 $\mu$m.

*Inorganic additive (2):*

Synthetic calcium silicate having a surface area of about 95 $m^2$/g

*Polymer:*

Polypropylene homopolymer

MFR = 8.0 g/10 min @ 230°C/2.16 kg (by ISO 1133)

*Stabilizer package:*

1 part sterically hindered phenol antioxidant, 1 part trisarylphosphite processing stabilizer, and 4 parts of the talc mineral filler (this is used for the purpose of diluting the stabilizers and to optimize dosing levels)

*- Preparation of dry components*

1. Dry inorganic additive at 110°C for 2 hours
2. Prepare mixture of talc mineral filler and inorganic additive
3. Mix for 7 minutes in lab Henchel mixer

*- Formulation*

The dry components were compounded with the polymer (in the amounts shown in Table 1 below) and stabilizer package, and then extruded using a Leistritz extruder. All samples contained 0.6 wt. % of the stabilizer package.

*- Screw profile*

T = 240°C (first 3 heating zones) then 205 °C - N;
Screw speed = 900 rpm
Output = 10 kg/h

Odour and physical properties of the filled polymer compositions were assessed in accordance with the methods described above. Results are summarized in Table 1 below.

Table 1.

| Sample | | A | B | 1 | 2 | 3 |
|---|---|---|---|---|---|---|
| Talc loading (wt. %) | | - | 20 | 20 | 20 | 21 |
| Inorganic additive (1) loading (wt. %) | | - | - | 1 | 2 | - |
| Inorganic additive (2) loading (wt. %) | | - | - | - | | 1 |
| **Flexural modulus (MPa)** | 0-5 adjusted @ 20 % | **1430** | **2635** | **2645** | **2695** | **2695** |
| | σ | 10 | 10 | 15 | 10 | 10 |
| **Impact strength (kJ/m$^2$)** | Charpy unnotched @ - 20 °C | **17.6** | **17.3** | **16.0** | **15.3** | **14.0** |
| | σ | 0.9 | 0.5 | 0.6 | 0.5 | 0.6 |
| **HDT** | @ 1820 kPa (°C) | **49.9** | **59.3** | **59.8** | **60.9** | **60.8** |
| | σ | 0.3 | 0.4 | 0.6 | 0.4 | 0.7 |
| **Odour performance** | Standard VDA 270 | **3.4** | **4.5** | **3.8** | **3.3** | **3.9** |
| | σ | 0.4 | 0.6 | 0.3 | 0.3 | 0.7 |

(continued)

| Sample | | A | B | 1 | 2 | 3 |
|---|---|---|---|---|---|---|
| System CIE | L* | 61.2 | 59.1 | 58.4 | 58.7 | 56.9 |
| | σ | 0.05 | 0.01 | 0.02 | 0.07 | 0.02 |

A = polypropylene only; B = polypropylene + talc; 1, 2 and 3 = polypropylene + talc + inorganic additive (1) or (2)

**Claims**

1. A filled composition comprising a substrate, functional filler, and an inorganic additive for reducing the odour of the filled composition, wherein the inorganic additive is present in an amount sufficient to reduce the odour of the filled composition absent the inorganic additive, wherein the functional filler is a mineral filler and comprises, consists essentially, or consists of, or is a phyllosilicate mineral, wherein the inorganic additive is a mineral additive other than the functional filler, the inorganic additive being a silica-containing or silicate mineral other than wollastonite, wherein the phyllosilicate mineral is talc, wherein the substrate is a polymer, and wherein odour is determined according to standard VDA 270.

2. The filled composition according to claim 1, wherein the mineral additive is diatomaceous earth or a calcium silicate, or a combination thereof, for example a flux calcined diatomaceous earth or a synthetic calcium silicate, or a combination thereof.

3. The filled composition according to claim 1 or claim 2, wherein the inorganic additive is present in amount sufficient to:

   (A) reduce the odour of the filled composition by:

   a. at least about 10 %, for example, at least about 25 %, or
   b. at least about 0.5 units according to standard VDA 270, for example, at least about 1.0 units according to standard VDA 270; and/or

   (B) increase the stiffness of the filled composition, for example, an amount sufficient to increase the stiffness of the filled polymer composition by:

   i. at least about 0.2 %, for example, at least about 2.0 %, or
   ii. at least about 5 MPa, for example, at least about 50 MPa.

4. The filled composition according to any preceding claim, wherein: (a) the inorganic additive is present in an amount of at least about 0.5 wt. %, for example, at least about 0.75 wt. %, or at least about 1.0 wt. %, based on the total weight of the filled composition; and/or (b) the functional filler, for example, mineral filler is present in an amount of at least about 10 wt. %, based on the total weight of the filled composition.

5. The filled composition according to any preceding claim, wherein the talc is a HAR talc or a micronized talc.

6. The filled composition according to any preceding claim, wherein the functional filler is surface treated.

7. The filled composition according to any preceding claim, wherein the substrate is present in an amount of at least about 50 wt. %, based on the total weight of the filled composition.

8. The filled composition according to any preceding claim, wherein the polymer is (a) a polymer comprising, consisting essentially, or consisting of, or being, polypropylene or (b) a blend of polymers, for example, a blend of polymers including an elastomer.

9. Use of an inorganic additive for reducing the odour of a filled composition comprising a substrate and mineral filler, wherein the inorganic additive is a silica-containing or silicate mineral other than wollastonite, wherein odour is determined according to standard VDA 270 and wherein the inorganic additive, mineral filler and substrate are as defined in any one of claims 1-8.

10. Use of an inorganic additive for reducing the odour and increasing the stiffness of a filled composition comprising a substrate and mineral filler, wherein odour is determined according to standard VDA 270 and wherein the inorganic additive, mineral filler and substrate are as defined in any one of claims 1-8.

11. A method of reducing the odour of a filled composition comprising a substrate and mineral filler, comprising adding to the filled composition an inorganic additive for reducing the odour of the filled composition, wherein the inorganic additive is a silica-containing or silicate mineral other than wollastonite, wherein odour is determined according to standard VDA 270 and wherein the inorganic additive, mineral filler and substrate are as defined in any one of claims 1-8.

12. A method of making a filled composition, the method comprising combining substrate, functional filler and a sufficient amount of an inorganic additive for reducing the odour of the filled composition such that the odour of the filled composition comprising the inorganic additive is reduced compared to the filled composition absent the inorganic additive, wherein the functional filler is a mineral filler and comprises, consists essentially, or consists of, or is a phyllosilicate mineral, wherein the inorganic additive is a mineral additive other than the functional filler, the inorganic additive being a silica-containing or silicate mineral other than wollastonite, wherein odour is determined according to standard VDA 270 and wherein the inorganic additive, mineral filler and substrate are as defined in any one of claims 1-8.

13. The method according to claim 12, wherein the method comprises: (a) compounding the substrate, functional filler, and inorganic additive, optionally along with processing aids; and/or (b) forming, for example, by extrusion or moulding, an article from the filled composition.

14. An article formed from the filled composition according to any one of claims 1-8 or obtainable by the method of any one of claims 11-13, wherein the article is optionally an automotive interior article, for example, dashboard, interior trim, or interior body panel.

**Patentansprüche**

1. Gefüllte Zusammensetzung, umfassend ein Substrat, einen funktionellen Füllstoff und ein anorganisches Additiv zum Verringerung des Geruchs der gefüllten Zusammensetzung, wobei das anorganische Additiv in einer Menge vorhanden ist, die ausreichend ist, um den Geruch der gefüllten Zusammensetzung in Abwesenheit des anorganischen Additivs zu verringern, wobei der funktionelle Füllstoff ein mineralischer Füllstoff ist und ein Phyllosilikat-Mineral umfasst, im Wesentlichen daraus besteht oder daraus besteht oder ist, wobei das anorganische Additiv ein mineralisches Additiv ist, das sich von dem funktionellen Füllstoff unterscheidet, wobei das anorganische Additiv ein Siliciumdioxid-haltiges Mineral oder ein Silicat-Mineral ist, das sich von Wollastonit unterscheidet, wobei das Phyllosilikat-Mineral Talkum ist, wobei das Substrat ein Polymer ist und wobei der Geruch gemäß Norm VOA 270 bestimmt wird.

2. Gefüllte Zusammensetzung gemäß Anspruch 1, wobei das mineralische Additiv Diatomeenerde oder ein Calciumsilicat oder eine Kombination davon ist, z. B. eine flusskalzinierte Diatomeenerde oder ein synthetisches Calciumsilicat oder eine Kombination davon.

3. Gefüllte Zusammensetzung gemäß Anspruch 1 oder Anspruch 2, wobei das anorganische Additiv in einer Menge vorhanden ist, die zu Folgendem ausreichend ist:

(A) Reduzieren des Geruchs der gefüllten Zusammensetzung, durch:

a. mindestens etwa 10 %, zum Beispiel mindestens etwa 25 % oder
b. mindestens ca. 0,5 Einheiten, z. B. gemäß der Norm VOA 270, mindestens etwa 1,0 Einheiten gemäß der Norm VOA 270; und/oder

(B) Erhöhen der Steifigkeit der gefüllten Zusammensetzung, zum Beispiel in einer Menge, die ausreichend ist, um die Steifigkeit der gefüllten Polymerzusammensetzung um Folgendes zu erhöhen:

i. mindestens etwa 0,2 %, zum Beispiel mindestens etwa 2,0 %, oder
ii. mindestens etwa 5 MPa, zum Beispiel mindestens etwa 50 MPa.

4. Gefüllte Zusammensetzung gemäß einem der vorherigen Ansprüche, wobei: (a) das anorganische Additiv in einer Menge von mindestens etwa 0,5 Gewichtsprozent, beispielsweise mindestens etwa 0,75 Gewichtsprozent oder mindestens etwa 1,0 Gewichtsprozent, bezogen auf das Gesamtgewicht der gefüllten Zusammensetzung, vorhanden ist; und/oder (b) der funktionelle Füllstoff, beispielsweise Mineralfüllstoff, in einer Menge von mindestens etwa 10 Gewichtsprozent, bezogen auf das Gesamtgewicht der gefüllten Zusammensetzung, vorhanden ist.

5. Gefüllte Zusammensetzung gemäß einem der vorherigen Ansprüche, wobei der Talk ein HAR-Talk oder ein mikronisierter Talk ist.

6. Gefüllte Zusammensetzung gemäß einem der vorherigen Ansprüche, wobei der funktionelle Füllstoff oberflächenbehandelt ist.

7. Gefüllte Zusammensetzung gemäß einem der vorherigen Ansprüche, wobei das Substrat in einer Menge von mindestens etwa 50 Gewichtsprozent, bezogen auf das Gesamtgewicht der gefüllten Zusammensetzung, vorhanden ist.

8. Gefüllte Zusammensetzung gemäß einem der vorherigen Ansprüche, wobei das Polymer (a) ein Polymer ist, das Polypropylen umfasst, im Wesentlichen daraus besteht oder daraus besteht oder ist, oder (b) ein Gemisch von Polymeren ist, zum Beispiel ein Gemisch aus Polymeren, das ein Elastomer beinhaltet.

9. Verwendung eines anorganischen Additivs zum Reduzieren des Geruchs einer gefüllten Zusammensetzung, umfassend ein Substrat und einen mineralischen Füllstoff, wobei das anorganische Additiv ein Siliciumdioxid-haltiges oder Silicat-haltiges Mineral ist, das nicht Wollastonit ist, wobei ein Geruch gemäß der Norm VOA 270 bestimmt wird und wobei das anorganische Additiv, der mineralische Füllstoff und das Substrat wie definiert in einem der Ansprüche 1-8 sind.

10. Verwendung eines anorganischen Additivs zum Reduzieren des Geruchs und zum Erhöhen der Steifigkeit einer gefüllten Zusammensetzung, umfassend ein Substrat und einen mineralischen Füllstoff, wobei der Geruch gemäß der Norm VOA 270 bestimmt wird und wobei das anorganische Additiv, der mineralische Füllstoff und das Substrat wie definiert in einem der Ansprüche 1-8 sind.

11. Verfahren zum Reduzieren des Geruchs einer gefüllten Zusammensetzung, umfassend ein Substrat und einen mineralischen Füllstoff, umfassend ein Hinzufügen eines anorganischen Additivs zum Reduzieren des Geruchs der gefüllten Zusammensetzung zu der gefüllten Zusammensetzung, wobei das anorganische Additiv ein Siliciumdioxid-haltiges oder Silicat-haltiges Mineral ist, das nicht Wollastonit ist, wobei ein Geruch gemäß der Norm VOA 270 bestimmt wird und wobei das anorganische Additiv, der mineralische Füllstoff und das Substrat wie definiert in einem der Ansprüche 1-8 sind.

12. Verfahren zum Herstellen einer gefüllten Zusammensetzung, das Verfahren umfassend ein Kombinieren von Substrat, funktionellem Füllstoff und einer ausreichenden Menge eines anorganischen Additivs zum Reduzieren des Geruchs der gefüllten Zusammensetzung, sodass der Geruch der gefüllten Zusammensetzung, die das anorganische Additiv umfasst, im Vergleich zu der gefüllten Zusammensetzung ohne das anorganische Additiv reduziert ist, wobei der funktionelle Füllstoff ein mineralischer Füllstoff ist und ein Phyllosilikat-Mineral umfasst, im Wesentlichen daraus besteht oder daraus besteht oder ist, wobei das anorganische Additiv ein mineralisches Additiv ist, das sich von dem funktionellen Füllstoff unterscheidet, wobei das anorganische Additiv ein Siliciumdioxid-haltiges Mineral oder ein Silicat-Mineral ist, das sich von Wollastonit unterscheidet, wobei der Geruch gemäß der Norm VOA 270 bestimmt wird und wobei das anorganische Additiv, der mineralische Füllstoff und das Substrat wie definiert in einem der Ansprüche 1-8 sind.

13. Verfahren gemäß Anspruch 12, wobei das Verfahren Folgendes umfasst: (a) das Mischen des Substrats, des funktionellen Füllstoffs und des anorganischen Additivs, optional zusammen mit Verarbeitungshilfsmitteln; und/oder (b) Formen eines Gegenstands aus der gefüllten Zusammensetzung, beispielsweise durch Extrusion oder Formen.

14. Gegenstand, der aus der gefüllten Zusammensetzung gemäß einem der Ansprüche 1-8 gebildet ist oder durch das Verfahren gemäß einem der Ansprüche 11-13 erlangt werden kann, wobei der Gegenstand optional ein Fahrzeuginnenausstattungsgegenstand ist, beispielsweise ein Armaturenbrett, eine Innenverkleidung oder ein innere Karosserietafel.

# EP 3 359 590 B1

**Revendications**

1. Une composition chargée comprenant un substrat, une charge fonctionnelle, et un additif inorganique pour réduire l'odeur de la composition chargée, dans laquelle l'additif inorganique est présent en une quantité suffisante pour réduire l'odeur de la composition chargée sans l'additif inorganique, dans laquelle la charge fonctionnelle est une charge minérale et comprend, consiste essentiellement, ou consiste en, ou est un minéral de phyllosilicate, dans laquelle l'additif inorganique est un additif minéral autre que la charge fonctionnelle, l'additif inorganique étant un minéral contenant de la silice ou un silicate autre que la wollastonite, dans laquelle le minéral de phyllosilicate est le talc, dans laquelle le substrat est un polymère, et dans laquelle l'odeur est déterminée selon la norme VDA 270.

2. La composition chargée selon la revendication 1, dans laquelle l'additif minéral est une terre de diatomées ou un silicate de calcium, ou une combinaison de ceux-ci, par exemple une terre de diatomées calcinée par flux ou un silicate de calcium synthétique, ou une combinaison de ceux-ci.

3. La composition chargée selon la revendication 1 ou la revendication 2, dans laquelle l'additif inorganique est présent en quantité suffisante pour :

   (A) réduire l'odeur de la composition chargée par :

   a. au moins environ 10 %, par exemple, au moins environ 25 %, ou
   b. au moins environ 0,5 unité selon la norme VDA 270, par exemple, au moins environ 1,0 unité selon la norme VDA 270 ; et / ou

   (B) augmenter la rigidité de la composition chargée, par exemple, une quantité suffisante pour augmenter la rigidité de la composition de polymère chargée par :

   i. au moins environ 0,2 %, par exemple, au moins environ 2,0 %, ou
   ii. au moins environ 5 MPa, par exemple, au moins environ 50 MPa.

4. La composition chargée selon l'une quelconque des revendications précédentes, dans laquelle : (a) l'additif inorganique est présent en une quantité d'au moins environ 0,5 % en poids, par exemple, d'au moins environ 0,75 % en poids, ou d'au moins environ 1,0 % en poids, sur la base du poids total de la composition chargée ; et / ou (b) la charge fonctionnelle, par exemple, la charge minérale est présente en une quantité d'au moins environ 10 % en poids, sur la base du poids total de la composition chargée.

5. La composition chargée selon l'une quelconque des revendications précédentes, dans laquelle le talc est un talc HAR ou un talc micronisé.

6. La composition chargée selon l'une quelconque des revendications précédentes, dans laquelle la charge fonctionnelle est traitée en surface.

7. La composition chargée selon l'une quelconque des revendications précédentes, dans laquelle le substrat est présent en une quantité d'au moins environ 50 % en poids, sur la base du poids total de la composition chargée.

8. La composition chargée selon l'une quelconque des revendications précédentes, dans laquelle le polymère est (a) un polymère comprenant, consistant essentiellement, ou consistant en, ou étant, du polypropylène ou (b) un mélange de polymères, par exemple, un mélange de polymères comprenant un élastomère.

9. Utilisation d'un additif inorganique pour réduire l'odeur d'une composition chargée comprenant un substrat et une charge minérale, dans laquelle l'additif inorganique est un minéral contenant de la silice ou un silicate autre que la wollastonite, dans laquelle l'odeur est déterminée selon la norme VDA 270 et dans laquelle l'additif inorganique, la charge minérale et le substrat sont tels que définis selon l'une quelconque des revendications 1 à 8.

10. Utilisation d'un additif inorganique pour réduire l'odeur et augmenter la rigidité d'une composition chargée comprenant un substrat et une charge minérale, dans laquelle l'odeur est déterminée selon la norme VDA 270 et dans laquelle l'additif inorganique, la charge minérale et le substrat sont tels que définis selon l'une quelconque des revendications 1 à 8.

**11.** Un procédé pour réduire l'odeur d'une composition chargée comprenant un substrat et une charge minérale, comprenant l'addition à la composition chargée d'un additif inorganique pour réduire l'odeur de la composition chargée, dans lequel l'additif inorganique est un minéral contenant de la silice ou un silicate autre que la wollastonite, dans lequel l'odeur est déterminée selon la norme VDA 270 et dans lequel l'additif inorganique, la charge minérale et le substrat sont tels que définis selon l'une quelconque des revendications 1 à 8.

**12.** Un procédé de fabrication d'une composition chargée, le procédé comprenant la combinaison d'un substrat, d'une charge fonctionnelle et d'une quantité suffisante d'un additif inorganique pour réduire l'odeur de la composition chargée de telle sorte que l'odeur de la composition chargée comprenant l'additif inorganique soit réduite par rapport à la composition chargée sans l'additif inorganique, dans lequel la charge fonctionnelle est une charge minérale et comprend, consiste essentiellement, ou consiste en, ou est un minéral de phyllosilicate, dans lequel l'additif inorganique est un additif minéral autre que la charge fonctionnelle, l'additif inorganique étant un minéral contenant de la silice ou un silicate autre que la wollastonite, dans lequel l'odeur est déterminée selon la norme VDA 270 et dans lequel l'additif inorganique, la charge minérale et le substrat sont tels que définis selon l'une quelconque des revendications 1 à 8.

**13.** Le procédé selon la revendication 12, dans lequel le procédé comprend : (a) le mélange du substrat, de la charge fonctionnelle, et de l'additif inorganique, éventuellement avec des auxiliaires technologiques; et /ou (b) la formation, par exemple, par extrusion ou moulage, d'un article à partir de la composition chargée.

**14.** Un article formé à partir de la composition chargée selon l'une quelconque des revendications 1 à 8 ou pouvant être obtenu par le procédé selon l'une quelconque des revendications 11 à 13, dans lequel l'article est éventuellement un article d'intérieur automobile, par exemple, un tableau de bord, une garniture intérieure, ou un panneau de carrosserie intérieur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5023286 A

- US 6348536 A

**Non-patent literature cited in the description**

- **G. BAUDET ; J. P. RONA.** *Ind. Min. Mines et Carr. Les techn.,* June 1990, 55-61